# EUROPEAN PATENT SPECIFICATION

(11) **EP 1 618 749 B1**
(45) Date of publication and mention of the grant of the patent: **03.01.2007**
(21) Application number: 04729935.9
(22) Date of filing: 28.04.2004
(51) Int. Cl.: H04Q 3/00

(54) **POLICY BASED MEDIA PATH SELECTION IN A BROADBAND ACCESS NETWORK**
REGELBASIERTES MEDIENWEGEAUSWÄHLEN IN EINEM BREITBANDZUGANGSNETZWERK
SELECTION DE CANAL MEDIA GEREE PAR DES REGLES DANS UN RESEAU D'ACCES A LARGE BANDE

(30) Priority: 28.04.2003 US 424455
(43) Date of publication of application: 25.01.2006
(73) Proprietor: TELEFONAKTIEBOLAGET LM ERICSSON (publ), 164 83 Stockholm (SE)
(72) Inventor: OSTERLUND, Hakan, SE-178 36 Ekero (SE)
(74) Representative: HOFFMANN EITLE
(86) International application number: PCT/IB2004/001288
(87) International publication number: WO 2004/098210

(56) References cited:
- EP-A- 0 719 062
- EP-A- 0 883 324
- US-A1- 2002 191 635

## Description

### BACKGROUND OF THE INVENTION

### Technical Field of the Invention

The present invention relates generally to broadband telecommunications access networks. More specifically, the present invention relates to a method for dynamically selecting a media path for a call and to an access network. A method and access network of the kind defined in the preamble of claims 1 and 12, respectively, is known from EP-A-0719062.

### Description of Related Art

Telecommunications systems currently separate broadband multimedia networks from conventional narrowband telephony (voice) networks from the end user's perspective. Voice calls and multimedia calls are made using different addresses (telephone numbers), and the voice and multimedia device terminals are hard-coupled to their respective networks. Although interworking functions (e.g., gateways) between the voice and multimedia network domains do exist, the gateways serve merely to connect calls originating in one domain to users that only have access to the other domain. The gateways do not possess the capability to intelligently select a media path as a function of the type of service requested for the call.

As a result of the separation between the voice and multimedia networks, subscribers are forced to use dedicated voice terminals (e.g., classic telephones) to gain access to narrowband voice services and dedicated multimedia terminals to gain access to broadband multimedia services. In addition, subscribers that subscribe to both multimedia and voice services are assigned separate addresses for each type of service. Thus, a called subscriber is typically prevented from accepting an incoming call on any terminal other than the one addressed by the calling subscriber. For example, in many cases, it would not be possible to answer a voice call on a multimedia terminal.

Therefore, what is needed is an interworking function for achieving dynamic media path selection depending on the type of service requested. In addition, what is needed is a broadband access network capable of interworking with voice networks to provide both voice and multimedia services to subscribers over the same broadband connection to support dynamic selection of the media path.

### SUMMARY OF THE INVENTION

To overcome the deficiencies of the prior art, embodiments of the present invention provide a system and method for dynamically selecting a media path for a call, based on policy data defined by a subscriber having a multimedia terminal and a voice terminal associated therewith. A broadband connection is provided between a broadband access node and the multimedia terminal and voice terminal. The broadband access node is connected to both a broadband transport network (BTN) and a narrowband transport network (NTN) to dynamically route calls to and from the BTN and NTN regardless of the subscriber terminal used (e.g., multimedia or voice), based on the subscriber policy data.
In embodiments of the present invention, when a message associated with a call involving the subscriber is received, the signaling data within the message is evaluated in comparison to the subscriber-defined policy data to determine a media path for the call. The media path includes at least one of the multimedia terminal and the voice terminal and either the BTN or the NTN.

### BRIEF DESCRIPTION OF THE DRAWINGS

The disclosed invention will be described with reference to the accompanying drawings, which show important sample embodiments of the invention and which are incorporated in the specification hereof by reference, wherein:
FIG. 1 is a block diagram of a prior art telecommunications system that separates the multimedia network from the voice network to provide static media path selection;
FIG. 2 is a block diagram of a telecommunications system providing dynamic media path selection between multimedia and voice access;
FIG. 3 is a functional block diagram illustrating exemplary processing components for selecting a media path using policy data established by a subscriber and signaling data within a session initiation protocol message;
FIG. 4 illustrates an exemplary session initiation protocol message;
FIGs. 5A-5C illustrate exemplary policy data formats; and
FIG. 6 is a block diagram illustrating an alternative media path for voice applications;
FIG. 7 is a flow chart illustrating an exemplary process for selecting a media path;
FIG. 8A is a flow chart illustrating an exemplary process for selecting a media path for outgoing calls;
FIG. 8B is a flow chart illustrating an exemplary process for selecting a media path for incoming calls;
FIG. 9 is a signaling diagram illustrating exemplary signaling for selecting a media path for outgoing calls; and
FIG. 10 is a signaling diagram illustrating exemplary signaling for selecting a media path for incoming calls.

### DETAILED DESCRIPTION OF THE EXEMPLARY EMBODIMENTS

The numerous innovative teachings of the present application will be described with particular reference to the exemplary embodiments. However, it should be understood that these embodiments provide only a few examples of the many advantageous uses of the innovative teachings herein. In general, statements made in the specification do not necessarily delimit any of the various claimed inventions. Moreover, some statements may apply to some inventive features, but not to others.

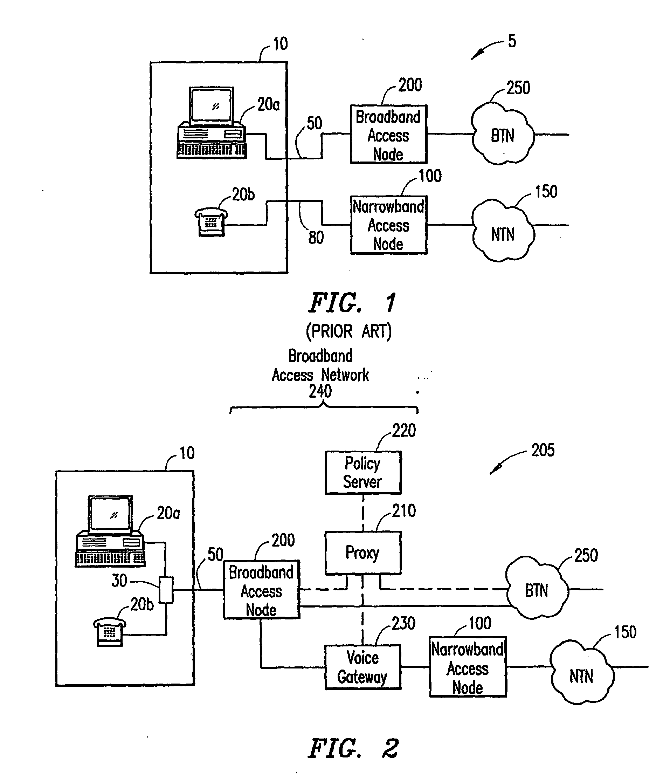

FIG. 1 illustrates a conventional telecommunications system 5 that separates the multimedia network from the voice network from the end user's perspective, thereby providing only static media path selection based on the type of service (voice or multimedia) requested. As used herein, the term media path refers to the path of the media (e.g., voice, data, video, etc.) through the telecommunications system, from the calling party terminal to the called party terminal. To provide both multimedia services and traditional voice services (voice and data) to a subscriber at a customer premises 10 (e.g., residence, business, etc.), separate terminals 20a and 20b are used for both multimedia calls and voice calls, respectively, and each of the terminals 20a and 20b are directly connected to a respective network node 200 and 100, respectively.

For example, a multimedia terminal 20a at the customer premises 10 has a broadband connection 50 (e.g., coaxial cable, optical fiber, ADSL, Ethernet, wireless, etc.) to a broadband access node 200. The broadband access node 200, in turn, connects to a broadband transport network (BTN) 250 for routing of multimedia traffic. As used herein, the term BTN 250 refers to any packet-switched high-capacity system (e.g., Mb/s or higher) that offers a multimedia transport system for any type of multimedia application. For example, the BTN 250 can be an Asynchronous Transfer Mode (ATM) network, Ethernet network, or other type of broadband transport network. Examples of applications supported by the BTN 250 include voice, HDTV, fax, video, CAD/CAM, data, telemetry, EFT, e-mail and teleshopping. By contrast, a voice terminal 20b at the customer premises 10 has a narrowband connection 80 (e.g., analog twisted pair wires) to a narrowband access node 100 (e.g., a legacy Public Switched Telephone Network (PSTN) Class 5 Local Exchange). The narrowband switch 100 connects to a narrowband transport network (NTN) 150 for routing of voice traffic. As used herein, the term NTN 150 refers to conventional circuit-switched networks, such as the PSTN.

Subscribers that subscribe to both multimedia and voice services are assigned separate addresses (e.g., E.164 address) for each type of service. Thus, a subscriber is typically prevented from dynamically selecting the terminal 20a or 20b to receive an incoming voice or multimedia call, depending on the type of call and other subscriber-defined parameters. For example, a subscriber may prefer to have incoming calls routed to a particular terminal 20a or 20b depending on the time of day or day of week. As another example, a subscriber may prefer to have incoming calls routed serially or in parallel to both voice terminals 20b and multimedia terminals 20a, depending on the type of service requested, the calling party or other factors. In addition, with the separation of the two networks, the subscriber is also prevented from dynamically selecting the outgoing media path for a call, depending on the type of service requested and other parameters. For example, a subscriber may prefer to route voice calls over the BTN 250, depending on the called party number (e.g., to reduce long-distance costs), or over the NTN 150 to take advantage of other narrowband services (e.g., conference calling, etc.).

Referring now FIG. 2, there is illustrated an exemplary telecommunications system 205 that enables dynamic media path selection, in accordance with embodiments of the present invention. Dynamic selection of the media path is accomplished using a broadband access network 240 as the combined data, multimedia and telephony (voice) access network. Thus, the multimedia terminals 20a and the voice terminals 20b at the customer premises 10 both connect via the broadband connection 50 to the broadband access node 200. With both terminals 20a and 20b being connected to the same broadband access node 200, a subscriber has the option to use the same E.164 address for both multimedia and voice calls, if so desired. A conversion box 30 can be installed at the customer premises 10 to connect the external broadband connection 50 to RJ-11 analog lines of various telephone extensions (voice terminals 20b) to supply a tip and ring function to each telephone extension and convert the voice packets received over the broadband connection 50 into analog speech. One example of a conversion box 30 is described in copending and commonly assigned U.S. Application for Patent Serial No. 09/208,816, which is hereby incorporated by reference in its entirety.

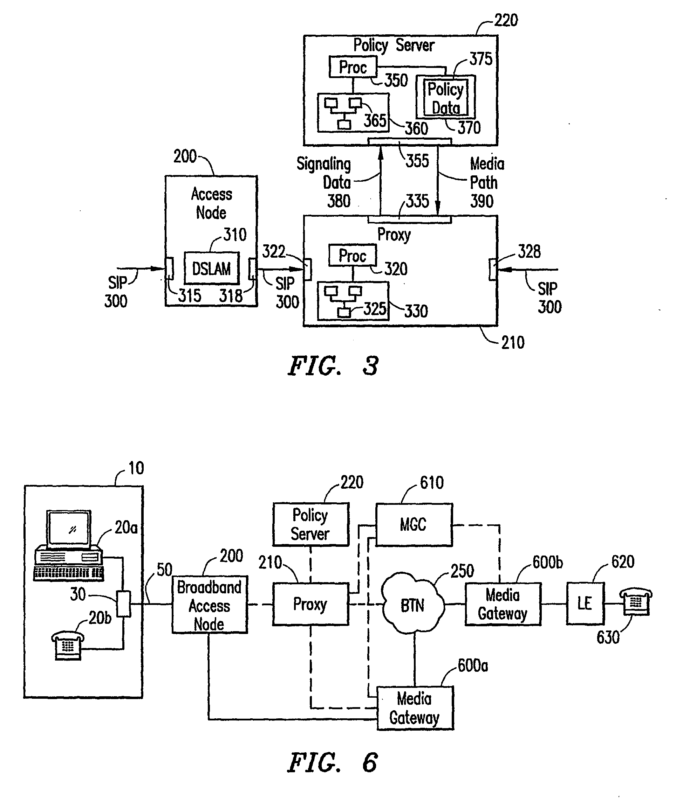

The broadband access node 200 further connects to the BTN 250 for transport of multimedia traffic and to a narrowband access node 100 (e.g., legacy PSTN switch) via a Voice Gateway 230 for transport of voice traffic over the NTN 150. The Voice Gateway 230 converts signaling and media between the broadband packet-switched format of the broadband access network 240 and the narrowband circuit-switched format of the NTN 150. In order to offer seamless access to both voice and multimedia services from any terminal 20a or 20b at the customer premises 10, the broadband access network 240 further includes a Proxy 210 and a Policy Server 220 having a signaling connection, indicated by the dashed lines, to the broadband access node 200. It should be understood that the Proxy 210 and Policy Server 220 can be physically housed within the broadband access node 200 or within separate nodes, and the functionality of the Proxy 210 and Policy Server 220 can be included within other functionality. For example, in the 3GPP (3^{rd} Generation Partnership Project) architecture, the Proxy 210 can be included within the call session control function (CSCF) functionality within the home domain of the subscriber. In general terms, the Proxy 210 functions to determine, by means of subscriber-defined policies stored within the Policy Server 220, whether a specific outgoing call should be routed through the BTN 250 or through the NTN 150 or whether a specific incoming call should be routed to the multimedia terminal 20a and/or the voice terminal 20b. The Proxy 210 and Policy Server 220 are described in more detail hereinbelow in connection with FIGs. 3-10.

FIG. 3 is a functional block diagram illustrating exemplary processing components for dynamically selecting a media path for a multimedia or voice call. In FIG. 3, the broadband access node 200 is shown including a DSLAM 310 for terminating an ADSL connection from the customer premises. However, it should be understood that any type of broadband access node 200 can be used to terminate any type of broadband connection to the customer premises. For outgoing calls, the broadband access node 200 includes a terminal-side interface 315 for receiving a signaling message 300 containing signaling data indicating various attributes ofthe call, such as the calling address, the destination address and the type of service, over the broadband connection and a network-side interface 318 for providing the signaling message 300 to the Proxy 210. The Proxy 210 includes a terminal-side interface 322 for receiving the signaling message 300 from the broadband access node 200, and for incoming calls, a network-side interface 328 for receiving the signaling message 300 from the transport network (BTN or NTN). It should be understood that, as used herein, the term interface refers to one or more physical or virtual ports or other type of link resident in software, hardware and/or firmware.

The Proxy 210 further includes a computer-readable medium 330 containing software applications 325 including computer-executable instructions, and a processor 320 capable of executing the software applications 325 to process the signaling message 300, extract relevant signaling data 380 and transmit the relevant signaling data 380 to the Policy Server 220 via a policy interface 335. The computer-readable medium 330 can be a memory device, such as a disk drive, random access memory (RAM), read-only memory (ROM), compact disk, floppy disk or tape drive, or any other type of storage device. The processor 320 can be any microprocessor, microcontroller or other processing device capable of performing the functions of the Proxy 210.

The Policy Server 220 includes a proxy interface 355 for receiving the extracted relevant signaling data 380 from the Proxy 210 and transmitting the selected media path 390 to the Proxy 210. The Policy Server 220 further includes a storage device 370 for storing policy data 375 established by subscribers associated with the Policy Server 220. For example, the storage device 370 can be a database, disk drive, random access memory (RAM), read-only memory (ROM), compact disk, floppy disk, tape drive or other type of memory device. The policy data 375 for each subscriber includes the policies for determining the media path 390 for a call to or from the subscriber.

Examples of policies that indicate that an outgoing call should be routed via the NTN include: (1) the called address is not a multimedia address; (2) the requested media type is audio with PSTN sound quality (or lower); (3) the calling address is not a subscriber to multimedia services; (4) the time of day indicates that the least cost route is through the NTN; or (5) any other suitable policy. Examples of policies that indicate that an outgoing call should be routed via the BTN include: (1) the requested media type is audio with better than PSTN sound quality; (2) the requested media type is other than audio (e.g., video); (3) the calling address is not a subscriber to voice services; (4) the time of day indicates that the least cost route is through the BTN; or (5) any other suitable policy.

Examples of policies that indicate that an incoming call should be connected to the voice terminal (or attempt to connect first to the voice terminal, depending on the policy) include: (1) the called address is not a multimedia address (if the subscriber has two addresses); (2) the requested media type is audio with PSTN sound quality (or lower); (3) the calling address is not a subscriber to multimedia services; (4) the time of day indicates that the subscriber prefers to have incoming calls routed to the voice terminal; or (5) any other suitable policy. Examples of policies that indicate that an incoming call should be connected to the multimedia terminal (or attempt to connect first to the multimedia terminal, depending on the policy) include: (1) the requested media type is audio with better than PSTN sound quality; (2) the requested media type is other than audio (e.g., video); (3) the calling address is not a subscriber to voice services; (4) the time of day indicates that the subscriber prefers to have incoming calls routed to the multimedia terminal; or (5) any other suitable policy

The Policy Server 220 further includes a computer-readable medium 360 containing software applications 365 including computer-executable instructions, and a processor 350 capable of executing the software applications 365 to process the signaling data 380, compare the signaling data 380 to the proxy data 375 to determine the media path 390 for the call and transmit the selected media path 390 to the Proxy 210 via the proxy interface 355. The computer-readable medium 360 can be a memory device, such as a disk drive, random access memory (RAM), read-only memory (ROM), compact disk, floppy disk or tape drive, or any other type of storage device. The processor 350 can be any microprocessor, microcontroller or other processing device capable of performing the functions of the policy server.

In one embodiment, a signaling protocol, such as the Session Initiation Protocol, is used to provide the signaling data. The Session Initiation Protocol (SIP), as discussed herein, refers to the protocol described in the Network Working Group Request for Comments: 3261, published in June 2002. SIP is an application-layer control protocol used to create, modify and terminate multimedia sessions. SIP can be used with other Internet Engineering Task Force (IETF) protocols, such as the Real-time Transport Protocol (RTP), the Real-Time Streaming Protocol (RTSP), the Media Gateway Control Protocol (MEGACO) and the Session Description Protocol (SDP), to form a complete multimedia architecture.

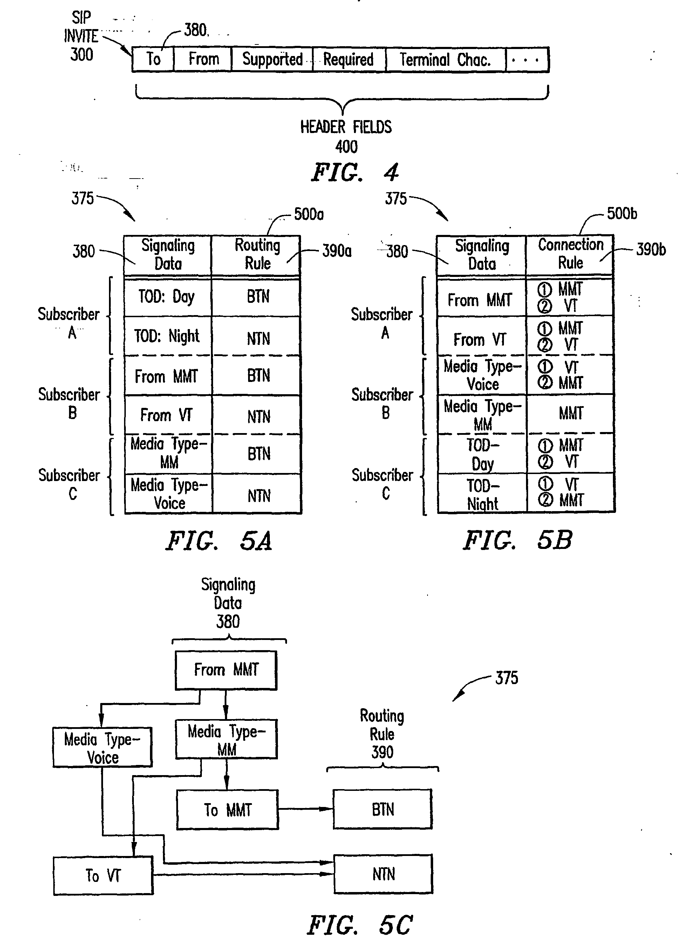

A SIP message is either a request from a client (e.g., terminal) to a server or a response from a server to a client: One type of SIP message is a SIP INVITE message, which is a request to initiate a session. The SIP INVITE message includes a number of header fields that contain the signaling data. An example of a SIP INVITE message 300 is shown in FIG. 4. Various header fields 400 of the type that can be included in the SIP INVITE message 300 are also illustrated for exemplary purposes. For example, a "TO" header field 400 can contain signaling data 380 identifying the called address, while a "FROM" header field 400 can contain signaling data 380 identifying the calling address. In addition, a "SUPPORTED" header field 400 can contain signaling data 380 indicating the media types supported by the calling address, a "REQUIRED" header field 400 can contain signaling data 380 indicating the media types required for the call and a "TERMINAL CHARACTERISTICS" header field 400 can contain signaling data 380 indicating the characteristics of the calling party terminal, such as multimedia terminal, voice terminal, data terminal, etc. Other header fields 400 can also be included that contain additional signaling data 380, some of which may be relevant for media path selection purposes.

FIGs. 5A-5C illustrate exemplary policy data 375 that can be used when evaluating signaling data 380 for a call to determine the media path for the call. The policy data 375 can be stored in a variety of formats, only three of which are shown for exemplary purposes. As shown in FIGs. 5A and 5B, the policy data 375 can be stored in a table format that maps the signaling data 380 within a particular header field to a particular media path 390 in a one-to-one correspondence. In this embodiment, the signaling data 380 within a single header field is determinative of the media path 390. FIG. 5A illustrates a table 500a for multiple subscribers that maps signaling data 380 for outgoing calls from those subscribers to routing rules 390a for routing the outgoing calls through the BTN or the NTN. The routing rules 390a represent the media paths for the outgoing calls. FIG. 5B illustrates a table 500b for multiple subscribers that maps signaling data 380 for incoming calls to those subscribers to connection rules 390b for connecting the incoming calls to the multimedia terminals or the voice terminals. The connection rules 390b represent the media paths for the incoming calls.

For example, in FIG. 5A, a first subscriber (Subscriber A) can establish that all outgoing calls during the day are routed through the BTN and all outgoing calls at night are routed through the NTN. A second subscriber (Subscriber B) can establish that all outgoing calls from a multimedia terminal are routed through the BTN and all outgoing calls from a voice terminal are routed through the NTN. A third subscriber (Subscriber C) can establish that all outgoing multimedia calls are routed through the BTN and all outgoing voice calls are routed through the NTN. It should be understood that the signaling data 380 and routing rules 390a shown in FIG. 5A are merely illustrative, and there are numerous different types of signaling data 380 and numerous different routing rules 390a that can be applied for each type of signaling data 380.

In FIG. 5B, a first subscriber (Subscriber A) can establish that all incoming calls from a multimedia terminal are connected to the multimedia terminal first, and if no answer is received at the multimedia terminal, connected to the voice terminal, and all incoming calls from a voice terminal are connected to the voice terminal first, and if no answer is received at the voice terminal, connected to the multimedia terminal. A second subscriber (Subscriber B) can establish that all incoming voice calls are connected to the voice terminal first, and if no answer is received at the voice terminal, connected to the multimedia terminal and all incoming multimedia calls are connected only to the multimedia terminal. A third subscriber (Subscriber C) can establish that all incoming calls received during the day are connected to the multimedia terminal first, and if no answer is received at the multimedia terminal, connected to the voice terminal, and all incoming calls received at night are connected to the voice terminal first, and if no answer is received at the voice terminal, connected to the multimedia terminal.

It should be understood that the signaling data 380 and connection rules 390b shown in FIG. 5B are merely illustrative, and there are numerous different types of signaling data 380 and numerous different connection rules 390b that can be applied for each type of signaling data 380. For example, the subscriber can designate the connection be made to one terminal only, to both terminals serially or to both terminals in parallel, as a function of the signaling data. In addition, the subscriber can designate the connection be made to certain voice terminals and/or certain multimedia terminals, if there are multiple voice terminals and/or multimedia terminals at the customer premises.

In other embodiments, as shown in FIG: 5C, the policy data 375 can be stored in a hierarchical and relational format to enable signaling data 380 within multiple header fields to be determinative of the media path 390. For example, in FIG. 5C, the signaling data 380 within the "FROM" header field is analyzed first to determine the calling address. If the calling address is a multimedia address, the signaling data 380 within the "SUPPORTED" or "REQUIRED" header field is analyzed to determine the type of service requested. If the media type is multimedia, the signaling data 380 within the "TO" header field is analyzed to determine the called address. If the called address is a multimedia address, the routing rule 390a indicates that the call should be routed over the BTN. However, if the media type is voice or the called address is a voice address, the routing rule 390a indicates that the call should be routed over the NTN. It should be understood that policy data formats shown in FIGs. 5A-5B are merely illustrative ofthe many different formats that could be used to store the policy data 375.

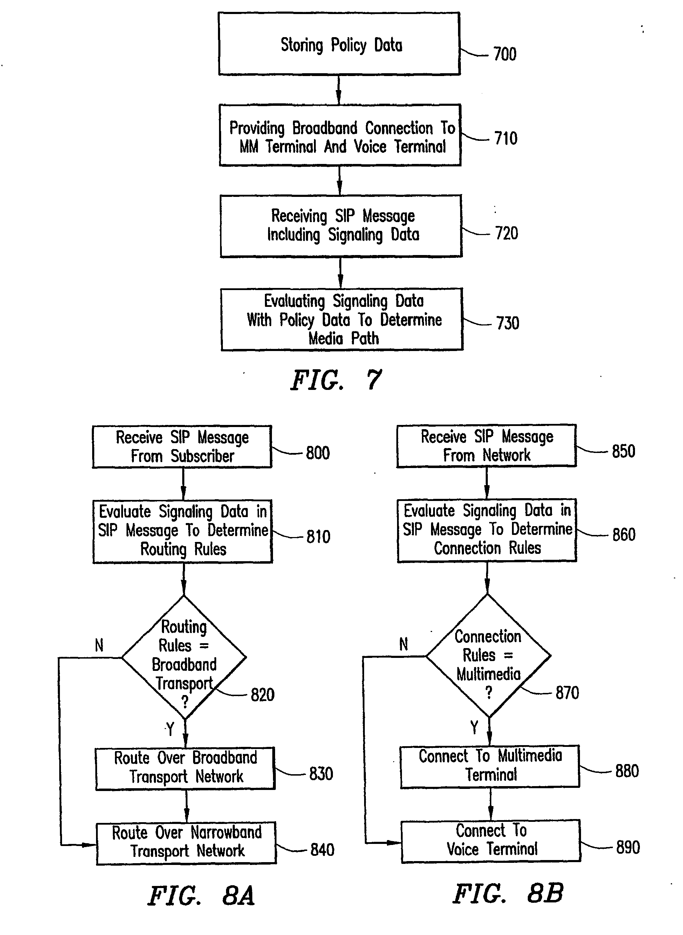

FIG. 6 is a block diagram illustrating an alternative media path for voice applications. In the embodiment of FIG. 6, a Media Gateway Controller (MGC) 610 and Media Gateways (MGs) 600a and 600b are provided to route voice (circuit-switched) media through the BTN 250. The bearer services for the media are provided by the packet-switched BTN 250 (e.g., via encapsulation), and the telecommunications services/call control (e.g., signaling information) may be transported over the packet-switched BTN 250 in an un-modified format (e.g., transparently in pipes), as indicated by the dashed lines, to provide conventional narrowband services over the BTN 250. Thus, the MGC 610 controls the MGs 600a and 600b to transport the voice packets from the Proxy 210 over the BTN 250, and convert the voice packets to circuit-switched speech for routing to the Local Exchange (LE) 620 serving the other voice terminal 630. MGCs 610 and MGs 600 are described in more detail in copending and commonly assigned U.S. Application for Patent Serial No. 09/764,953, which is hereby incorporated by reference in its entirety.
Sample embodiments of the present invention will now be described in connection with FIGs. 7-10. It should be understood that the following scenarios are included for illustrative purposes only, and should not be considered to cover all possible scenarios.

FIG. 7 is a flow chart illustrating an exemplary process for selecting a media path. A subscriber that subscribes to both telephony (voice) and multimedia services can define policy data for selecting a media path for incoming and outgoing calls to and from the subscriber, based on the type of service requested or other subscriber-defined parameters. The policy data can be stored in the access network for subsequent dynamic selection of media paths for calls to or from the subscriber (block 700). To enable dynamic selection of media paths between multimedia terminals and voice terminals of the subscriber, a broadband connection between a broadband access node of the access network and both of the terminals is provided (block 710).

Upon receiving a message associated with an incoming or outgoing call (block 720), the signaling data within the message is evaluated in comparison to the policy data to determine the media path for the call (block 730). The media path includes at least one of the subscriber terminals (multimedia or voice) and a transport network. The transport network can be a broadband transport network or a narrowband transport network.

FIG. 8A is a flow chart illustrating an exemplary process for selecting a media path for outgoing calls. When a subscriber initiates a call from one of the subscriber terminals (voice or multimedia), the terminal transmits a SIP INVITE message to the broadband access network that includes signaling data indicative of the type of service requested, calling address, called address, terminal characteristics, and other relevant information pertaining to the call (block 800). The broadband access network evaluates the signaling data in comparison to the policy data of the subscriber to determine the routing rules for the call (block 810). If the routing rules indicate that the call should be routed over the broadband transport network (block 820), the broadband access network routes the call over the broadband transport network (block 830). Otherwise, the call is routed over the narrowband transport network (block 840).

FIG. 8B is a flow chart illustrating an exemplary process for selecting a media path for incoming calls. When a SIP INVITE message for an incoming call to the subscriber is received at the broadband access network of the subscriber (block 850), the broadband access network evaluates the signaling data included within the SIP INVITE message in comparison to the policy data of the subscriber to determine the connection rules for the call (block 860). If the connection rules indicate that the call should be connected to the multimedia terminal (block 870), the broadband access network connects the call to the multimedia terminal (block 880). Otherwise, the call is connected to the voice terminal (block 890).

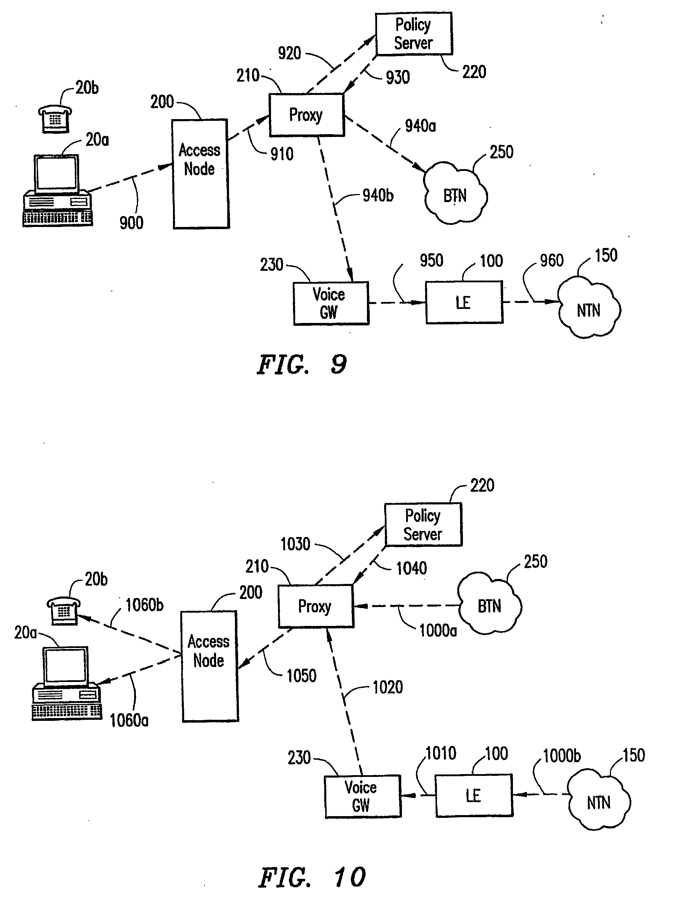

FIG. 9 is a signaling diagram illustrating exemplary signaling for selecting a media path for outgoing calls. When a subscriber requests initiation of a session from a multimedia terminal 20a (e.g., by using a SIP INVITE message), the INVITE message is sent from the multimedia terminal 20a to the broadband access node 200 (step 900) and then from the broadband access node 200 to the Proxy 210 (step 910) in the broadband access network where the subscribers policy data is stored. The Proxy 210 evaluates the signaling data and forwards the relevant signaling data to the Policy Server 220 (step 920) for evaluation of the relevant signaling data in comparison with the policy data for the subscriber stored in the Policy Server 220. The Policy Server 220 replies to the Proxy 210 with the selected media path for the call based on the application of the policies within the policy data to the relevant signaling data (step 930). If the media path indicates a multimedia call, the Proxy 210 routes the call over the broadband transport network 250 (step 940a). However, if the media path indicates a voice (PSTN) call, the Proxy 210 forwards the call to the Voice Gateway 230 for conversion between the packet-switched format ofthe broadband access network (broadband access node 200) to circuit-switched format (step 940b) for routing the call to the subscribers Local Exchange (LE) 100 (step 950) and through the NTN 150 (step 960), enabling access to all voice services for the call.

FIG. 10 is a signaling diagram illustrating exemplary signaling for selecting a media path for incoming calls. When an ISUP IAM message is received for an incoming call to a subscriber over the NTN 150 (step 1000b), the IAM is sent from the subscribers LE 100 to the Voice Gateway 230 (step 1010), which maps the IAM into a SIP INVITE message for forwarding to the Proxy 210 (step 1020). The called address within the IAM for an incoming call to the subscriber received over the NTN 150 can be the same as the called address within a SIP INVITE message for an incoming call to the subscriber received at the Proxy 210 directly over the multimedia network (step 1000a). Using the called address, the Proxy 210 extracts the relevant signaling data and accesses the Policy Server 220 to evaluate the signaling data in comparison to the subscribers policy data (step 1030) and determine the media path for the call (step 1040). The Proxy 210 forwards the call to the broadband access node 200 (step 1050) for connection to the subscribers multimedia (step 1060a) and/or voice terminal (step 1060b). For example, the multimedia and voice terminals can be rung serially or in parallel, depending on the policy data and registration data for the terminals (e.g., whether or not the subscriber has registered the terminals with the network).

As will be recognized by those skilled in the art, the innovative concepts described in the present application can be modified and varied over a wide range of applications. Accordingly, the scope of patented subject matter should not be limited to any of the specific exemplary teachings discussed, but is instead defined by the following claims.

## Claims

1. A method for dynamically selecting a media path for a call, comprising:
providing (710) a broadband connection (50) between a broadband access node (200) and a multimedia terminal (20a) and a voice terminal (20b), said broadband access node (200) being connected to both a broadband transport network (250) and a narrowband transport network (150); **characterized by**
storing (700) policy data (375) defined by a subscriber (10) having said multimedia terminal (20a) and said voice terminal (20b) associated therewith;
receiving (720) a message (300) associated with a call involving the subscriber (10), said message having signaling data (380) therein; and
evaluating (730) said signaling data in comparison to said policy data (375) to determine a media path (390) for the call, said media path including at least one of said multimedia terminal (20a) and said voice terminal (20b) and one of said broadband transport network (250) and said narrowband transport network (150).

2. The method of Claim 1, wherein said receiving further comprises:
receiving a session initiation protocol INVITE message (300) containing a plurality of header fields (400), said signaling data being included within said header fields (400) .

3. The method of Claim 2, wherein said receiving (720) further comprises:
receiving an Initial Address Message for the call from said narrowband transport network; and
converting said Initial Address Message to the session initiation protocol INVITE message (300).

4. The method of Claim 2, wherein said evaluating (730) further comprises:
mapping said signaling data in one or more of said header fields (400) to said policy data (375) to determine said media path (390).

5. The method of Claim 4, wherein said mapping further comprises:
mapping said signaling data in one or more of said header fields (400) to routing rules included within said policy data (375) to determine said media path (390) when said call is an outgoing call from the subscriber (10), said routing rules indicating said broadband transport network (250) or said narrowband transport network (150).

6. The method of Claim 4, wherein said mapping further comprises:
mapping said signaling data in one or more of said header fields (400) to connection rules included within said policy data (375) to determine said media path (390) when said call is an incoming call to the subscriber (10), said media path indicating at least one of said multimedia terminal (20a) and said voice terminal (20b).

7. The method of Claim 6, further comprising:
ringing one of said multimedia terminal and said voice terminal.

8. The method of Claim 6, further comprising:
ringing said multimedia terminal and said voice terminal serially in an order determined by said connection rules.

9. The method of Claim 6, further comprising:
ringing said multimedia terminal and said voice terminal in parallel.

10. The method of Claim 1, wherein said evaluating further comprises:
extracting relevant signaling data (380) from said message; and
evaluating said relevant signaling data in comparison to said policy data (375) to determine said media path for the call.

11. The method of Claim 1, wherein the call is an outgoing voice call, and further comprising:
routing said outgoing voice call over said broadband transport network (250).

12. An access network within a telecommunications system, said access network being connected to a broadband transport network (250) and a narrowband transport network (150), said access network comprising:
a broadband access node (200) having a broadband connection (50) to a multimedia terminal (20a) and a voice terminal (20b) of a subscriber (10), said broadband access node being operable to connect a call involving the subscriber using a media path (390) dynamically selected for said call;
**characterized by**
a proxy (210) operatively connected to said broadband access node (200) and having an interface (328) for receiving a message (300) associated with said call, said message having signaling data (380) therein; and
a policy server (220) storing policy data (375) defined by the subscriber (10), said policy server (220) having an interface (355) for receiving said signaling data (380) from said proxy (210) and being operable to evaluate said signaling data (380) in comparison to said policy data (375) to determine said media path (390) for the call, said media path (390) including at least one of said multimedia terminal (20a) and said voice terminal (20b) and one of said broadband transport network (250) and said narrowband transport network (150).

13. The access network of Claim 12, further comprising:
a voice gateway (230) connected between said broadband access node (200) and said narrowband transport network (150) for interworking between said broadband access node (200) and said narrowband transport network (150).

14. The access network of Claim 13, wherein said call is an incoming call to the subscriber (10), and said voice gateway (230) is further operable to receive an Initial Address Message for the call, convert said Initial Address Message to a session initiation protocol INVITE message (300) and transmit said session initiation protocol INVITE message to said proxy (210).

15. The access network of Claim 12, wherein said call is a voice call, and further comprising:
a media gateway (600a) connected between said broadband access node (200) and said broadband transport network (250) for routing said voice call over said broadband transport network (250).

16. The access network of Claim 12, wherein said message (300) is a session initiation protocol INVITE message containing a plurality of header fields (400), said signaling data (380) being included within said header fields.

17. The access network of Claim 16, wherein said signaling data within said header fields (400) include at least a calling address, a called address and a media type.

18. The access network of Claim 16, wherein said policy data (375) includes routing rules (390a), said policy server (220) being further operable to map said signaling data (380) in one or more of said header fields (400) to said routing rules included to determine said media path when said call is an outgoing call from the subscriber (10), said routing rules indicating said broadband transport network (250) or said narrowband transport network (150).

19. The access network of Claim 16, wherein said policy data (375) includes connection rules, said policy server (220) being further operable to map said signaling data (380) in one or more of said header fields (400) to said connection rules to determine said media path (390) when said call is an incoming call to the subscriber (10), said media path (390) indicating at least one of said multimedia terminal (20a) and said voice terminal (20b).

## Patentansprüche

1. Verfahren zum dynamischen Auswählen eines Medienpfads für einen Anruf, umfassend:
Bereitstellen (710) einer Breitbandverbindung (50) zwischen einem Breitbandzugriffsknoten (200) und einem Multimediaendgerät (20a) und einem Sprachendgerät (20b), wobei der Breitbandzugriffsknoten (200) mit sowohl einem Breitbandtransportnetz (250) als auch einem Schmalbandtransportnetz (150) verbunden ist;
**gekennzeichnet durch**
Speichern (700) von Strategiedaten (375), die **durch** einen Teilnehmer (10) definiert sind, der das Multimediaendgerät (20a) und das Sprachendgerät (20b) zugeordnet aufweist;
Empfangen (720) einer Nachricht (300), die einem Anruf zugeordnet ist, der den Teilnehmer (10) einbezieht, wobei die Nachricht Signalisierungsdaten (380) darin aufweist;
Evaluieren (730) der Signalisierungsdaten im Vergleich zu den Strategiedaten (375), um einen Medienpfad (390) für den Anruf zu bestimmen, wobei der Medienpfad zumindest eines des Multimediaendgeräts (20a) und des Sprachendgeräts (20b) und eines des Breitbandtransportnetzes (250) und des Schmalbandtransportnetzes (150) einschließt.

2. Verfahren nach Anspruch 1, wobei das Empfangen ferner umfasst:
Empfangen einer Sitzungsinitiierungs-Protokoll-INVITE-Nachricht (300), die eine Mehrzahl von Header-Feldern (400) enthält, wobei die Signalisierungsdaten innerhalb der Header-Felder (400) eingeschlossen sind.

3. Verfahren nach Anspruch 2, wobei das Empfangen (720) ferner umfasst:
Empfangen einer Anfangsadressnachricht für den Anruf von dem Schmalbandtransportnetz; und
Konvertieren der Anfangsadressnachricht in die Sitzungsinitiierungs-Protokoll-INVITE-Nachricht (300).

4. Verfahren nach Anspruch 2, wobei das Evaluieren (730) ferner umfasst:
Abbilden der Signalisierungsdaten in einem oder mehreren der Header-Felder (400) auf die Strategiedaten (375), um den Medienpfad (390) zu bestimmen.

5. Verfahren nach Anspruch 4, wobei das Abbilden ferner umfasst:
Abbilden der Signalisierungsdaten in einem oder mehreren der Header-Felder (400) auf Weiterleitungsregeln, die innerhalb der Strategiedaten (375) eingeschlossen sind, um den Medienpfad (390) zu bestimmen, wenn der Anruf ein von dem Teilnehmer (10) abgehender Anruf ist, wobei die Weiterleitungsregeln das Breitbandtransportnetz (250) oder das Schmalbandtransportnetz (150) anzeigen.

6. Verfahren nach Anspruch 4, wobei das Abbilden ferner umfasst:
Abbilden der Signalisierungsdaten in einem oder mehreren der Header-Felder (400) auf Verbindungsregeln, die innerhalb der Strategiedaten (375) eingeschlossen sind, um den Medienpfad (390) zu bestimmen, wenn der Anruf ein bei dem Teilnehmer (10) ankommender Anruf ist, wobei der Medienpfad zumindest eines des Multimediaendgeräts (20a) und des Sprachendgeräts (20b) anzeigt.

7. Verfahren nach Anspruch 6, ferner umfassend:
Anrufen eines des Multimediaendgeräts und des Sprachendgeräts.

8. Verfahren nach Anspruch 6, ferner umfassend:
Anrufen des Multimediaendgeräts und des Sprachendgeräts seriell in einer Reihenfolge, die durch die Verbindungsregeln bestimmt ist.

9. Verfahren nach Anspruch 6, ferner umfassend:
Anrufen des Multimediaendgeräts und des Sprachendgeräts parallel.

10. Verfahren nach Anspruch 1, wobei das Evaluieren ferner umfasst:
Extrahieren relevanter Signalisierungsdaten (380) aus der Nachricht; und
Evaluieren der relevanten Signalisierungsdaten im Vergleich zu den Strategiedaten (375), um den Medienpfad für den Anruf zu bestimmen.

11. Verfahren nach Anspruch 1, wobei der Anruf ein abgehender Sprachanruf ist, und ferner umfassend:
Weiterleiten des abgehenden Sprachanrufs über das Breitbandtransportnetz (250).

12. Zugriffsnetz innerhalb eines Telekommunikationssystems, wobei das Zugriffsnetz mit einem Breitbandtransportnetz (250) und einem Schmalbandtransportnetz (150) verbunden ist, wobei das Zugriffsnetz umfasst:
einen Breitbandzugriffsknoten (200), der eine Breitbandverbindung (50) mit einem Multimediaendgerät (20a) und einem Sprachendgerät (20b) eines Teilnehmers (10) aufweist, wobei der Breitbandzugriffsknoten betriebsfähig ist, einen Anruf, der den Teilnehmer einbezieht, unter Verwendung eines Medienpfads (390) zu verbinden, der dynamisch für den Anruf ausgewählt ist;
**gekennzeichnet durch**
einen Proxy (210), der betriebsmäßig mit dem Breitbandzugriffsknoten (200) verbunden ist und eine Schnittstelle (328) zum Empfangen einer Nachricht (300) aufweist, die dem Anruf zugeordnet ist, wobei die Nachricht Signalisierungsdaten (380) darin aufweist; und
einen Strategie-Server (220), der Strategiedaten (375) speichert, die von dem Teilnehmer (10) definiert sind, wobei der Strategie-Server (220) eine Schnittstelle (355) zum Empfangen der Signalisierungsdaten (380) von dem Proxy (210) aufweist und betriebsfähig ist, die Signalisierungsdaten (380) im Vergleich zu den Strategiedaten (375) zu evaluieren, um den Medienpfad (390) für den Anruf zu bestimmen, wobei der Medienpfad (390) zumindest eines des Multimediaendgeräts (20a) und des Sprachendgeräts (20b) und eines des Breitbandtransportnetzes (250) und des Schmalbandtransportnetzes (150) einschließt.

13. Zugriffsnetz nach Anspruch 12, ferner umfassend:
einen Sprach-Gateway (230), der zwischen dem Breitbandzugriffsknoten (200) und dem Schmalbandtransportnetz (150) verbunden ist, um zwischen dem Breitbandzugriffsknoten (200) und dem Schmalbandzugriffsnetz (150) zu arbeiten.

14. Zugriffsnetz nach Anspruch 13, wobei der Anruf ein bei dem Teilnehmer (10) ankommender Anruf ist und der Sprach-Gateway (230) ferner betriebsfähig ist, eine Anfangsadressnachricht für den Anruf zu empfangen, die Anfangsadressnachricht in eine Sitzungsinitiierungs-Protokoll-INVITE-Nachricht (300) zu konvertieren und die Sitzungsinitiierungs-Protokoll-INVITE-Nachricht zu dem Proxy (210) zu senden.

15. Zugriffsnetz nach Anspruch 12, wobei der Anruf ein Sprachanruf ist, und ferner umfassend:
einen Medien-Gateway (600a), der zwischen dem Breitbandzugriffsknoten (200) und dem Breitbandtransportnetz (250) verbunden ist, um den Sprachanruf über das Breitbandtransportnetz (350) weiterzuleiten.

16. Zugriffsnetz nach Anspruch 12, wobei die Nachricht (300) eine Sitzungsinitiierungs-Protokoll-INVITE-Nachricht ist, die eine Mehrzahl von Header-Feldern (400) enthält, wobei die Signalisierungsdaten (380) innerhalb der Header-Felder eingeschlossen sind.

17. Zugriffsnetz nach Anspruch 16, wobei die Signalisierungsdaten innerhalb der Header-Felder (400) zumindest eine anrufende Adresse, ein angerufene Adresse und einen Medientyp einschließen.

18. Zugriffsnetz nach Anspruch 16, wobei die Strategiedaten (375) Weiterleitungsregeln (390a) einschließen, wobei der Strategie-Server (220) ferner betriebsfähig ist, die Signalisierungsdaten (380) in einem oder mehreren der Header-Felder (400) auf die Weiterleitungsregeln abzubilden, die eingeschlossen sind, um den Medienpfad zu bestimmen, wenn der Anruf ein von dem Teilnehmer (10) abgehender Anruf ist, wobei die Weiterleitungsregeln das Breitbandtransportnetz (250) oder das Schmalbandtransportnetz (150) anzeigen.

19. Zugriffsnetz nach Anspruch 16, wobei die Strategiedaten (375) Verbindungsregeln einschließen, wobei der Strategie-Server (220) ferner betriebsfähig ist, die Signalisierungsdaten (380) in einem oder mehreren der Header-Felder (400) auf die Verbindungsregeln abzubilden, um den Medienpfad (390) zu bestimmen, wenn der Anruf ein bei dem Teilnehmer (10) ankommender Anruf ist, wobei der Medienpfad (390) zumindest eines des Multimediaendgeräts (20a) und des Sprachendgeräts (20b) anzeigt.

## Revendications

1. Procédé de sélection dynamique d'un chemin de contenu pour un appel, comprenant l'étape consistant à :
fournir (710) une connexion à large bande (50) entre un noeud d'accès à large bande (200) et un terminal multimédia (20a) et un terminal vocal (20b), ledit noeud d'accès à large bande (200) étant connecté à la fois à un réseau de transport à large bande (250) et à un réseau de transport à bande étroite (150) ;
**caractérisé par** les étapes consistant à :
stocker (700) des données de politique (375) définies par un abonné (10) associé audit terminal multimédia (20a) et audit terminal vocal (20b) ;
recevoir (720) un message (300) associé à un appel faisant intervenir l'abonné (10), ledit message contenant des données de signalisation (380) ; et
évaluer (730) lesdites données de signalisation par comparaison avec lesdites données de politique (375) afin de déterminer un chemin de contenu (390) pour l'appel, ledit chemin de contenu comprenant au moins l'un desdits terminal multimédia (20a) et terminal vocal (20b) et un desdits réseau de transport à large bande (250) et réseau de transport à bande étroite (150).

2. Procédé selon la revendication 1, dans lequel ladite étape de réception comprend en outre l'étape consistant à :
recevoir un message INVITE du protocole d'ouverture de session (300) contenant une pluralité de zones d'en-tête (400), lesdites données de signalisation étant incluses dans lesdites zones d'en-tête (400).

3. Procédé selon la revendication 2, dans lequel ladite étape de réception comprend en outre les étapes consistant à :
recevoir un message d'adresse initiale pour l'appel en provenance dudit réseau de transport à bande étroite ; et
convertir ledit message d'adresse initiale en message INVITE du protocole d'ouverture de session (300).

4. Procédé selon la revendication 2, dans lequel ladite étape d'évaluation (730) comprend en outre l'étape consistant à :
mettre en correspondance lesdites données de signalisation, dans une ou plusieurs desdites zones d'entête (400), avec lesdites données de politique (375), afin de déterminer le chemin de contenu (390).

5. Procédé selon la revendication 4, dans lequel ladite étape de mise en correspondance comprend en outre l'étape consistant à :
mettre en correspondance lesdites données de signalisation, dans une ou plusieurs desdites zones d'entête (400), avec des règles de routage comprises dans lesdites données de politique (375), afin de déterminer ledit chemin de contenu (390), lorsque ledit appel est un appel sortant provenant de l'abonné (10), lesdites règles de routage indiquant ledit réseau de transport à large bande (250) ou ledit réseau de transport à bande étroite (150).

6. Procédé selon la revendication 4, dans lequel ladite étape de mise en correspondance comprend en outre l'étape consistant à :
mettre en correspondance lesdites données de signalisation, dans une ou plusieurs desdites zones d'entête (400), avec des règles de connexion comprises dans lesdites données de politique (375), afin de déterminer ledit chemin de contenu (390), lorsque ledit appel est un appel entrant destiné à l'abonné (10), ledit chemin de contenu indiquant au moins un terminal parmi ledit terminal multimédia (20a) et ledit terminal vocal (20b).

7. Procédé selon la revendication 6, comprenant en outre l'étape consistant à :
envoyer une sonnerie à un terminal parmi ledit terminal multimédia et ledit terminal vocal.

8. Procédé selon la revendication 6, comprenant en outre l'étape consistant à :
envoyer une sonnerie audit terminal multimédia et audit terminal vocal séquentiellement, dans un ordre déterminé par lesdites règles de connexion.

9. Procédé selon la revendication 6, comprenant en outre l'étape consistant à :
envoyer une sonnerie audit terminal multimédia et audit terminal vocal en parallèle.

10. Procédé selon la revendication 1, dans lequel ladite étape d'évaluation comprend en outre les étapes consistant à :
extraire des données de signalisation pertinentes (380) dudit message ; et
évaluer lesdites données de signalisation pertinentes par comparaison avec lesdites données de politique (375) afin de déterminer ledit chemin de contenu pour l'appel.

11. Procédé selon la revendication 1, dans lequel l'appel est un appel vocal sortant, comprenant en outre l'étape consistant à :
router ledit appel vocal sortant sur ledit réseau de transport à large bande (250).

12. Réseau d'accès dans un système de télécommunications, ledit réseau d'accès étant connecté à un réseau de transport à large bande (250) et à un réseau de transport à bande étroite (150), ledit réseau d'accès comprenant :
un noeud d'accès à large bande (200), possédant une connexion à large bande (50) avec un terminal multimédia (20a) et un terminal vocal (20b) d'un abonné (10), ledit noeud d'accès à large bande étant en mesure de connecter un appel intéressant l'abonné en utilisant un chemin de contenu (390) sélectionné dynamiquement pour cet appel ;
**caractérisé par**
un serveur mandataire (210) connecté opérationnellement audit noeud d'accès à large bande (200) et ayant une interface (328) destinée à recevoir un message (300) associé audit appel, ledit message contenant des données de signalisation (380) ; et
un serveur de politique (220) stockant des données de politique (375) définies par l'abonné (10), ledit serveur de politique (220) ayant une interface (355) destinée à recevoir lesdites données de signalisation (380) dudit serveur mandataire (210) et étant en mesure d'évaluer lesdites données de signalisation (380) par comparaison avec lesdites données de politique (375), afin de déterminer ledit chemin de contenu (390) pour l'appel, ledit chemin de contenu (390) comprenant au moins l'un desdits terminal multimédia (20a) et terminal vocal (20b) et un desdits réseau de transport à large bande (250) et réseau de transport à bande étroite (150).

13. Réseau d'accès selon la revendication 12, comprenant en outre :
une passerelle vocale (230) connectée entre ledit noeud d'accès à large bande (200) et ledit réseau de transport à bande étroite (150) pour assurer l'interfonctionnement entre ledit noeud d'accès à large bande (200) et ledit réseau de transport à bande étroite (150).

14. Réseau d'accès selon la revendication 13, dans lequel ledit appel est un appel entrant destiné à l'abonné (10) et ladite passerelle vocale (230) est en outre en mesure de recevoir un message d'adresse initiale pour l'appel, de convertir ledit message d'adresse initiale en un message INVITE du protocole d'ouverture de session (300) et de transmettre ledit message INVITE du protocole d'ouverture de session audit serveur mandataire (210).

15. Réseau d'accès selon la revendication 12, comprenant en outre :
une passerelle de contenu (600a), connectée entre ledit noeud d'accès à large bande (200) et ledit réseau de transport à large bande (250), afin de router ledit appel vocal sur ledit réseau de transport à large bande (250).

16. Réseau d'accès selon la revendication 12, dans lequel ledit message (300) est un message INVITE du protocole d'ouverture de session, contenant une pluralité de zones d'en-tête (400), lesdites données de signalisation (380) étant incluses dans lesdites zones d'en-tête.

17. Réseau d'accès selon la revendication 16, dans lequel lesdites données de signalisation dans lesdites zones d'en-tête (400) comprennent au moins une adresse appelante, une adresse appelée et un type de contenu.

18. Réseau d'accès selon la revendication 16, dans lequel lesdites données de politique (375) comprennent des règles de routage (390a), ledit serveur de politique (220) étant en outre en mesure de mettre en correspondance lesdites données de signalisation (380), dans une ou plusieurs desdites zones d'en-tête (400), avec lesdites règles de routage incluses, afin de déterminer ledit chemin de contenu lorsque ledit appel est un appel sortant provenant de l'abonné (10), lesdites règles de routage indiquant ledit réseau de transport à large bande (250) ou ledit réseau de transport à bande étroite (150).

19. Réseau d'accès selon la revendication 16, dans lequel lesdites données de politique (375) comprennent des règles de connexion, ledit serveur de politique (220) étant en outre en mesure de mettre en correspondance lesdites données de signalisation (380), dans une ou plusieurs desdites zones d'en-tête (400), avec lesdites règles de connexion, afin de déterminer ledit chemin de contenu (390) lorsque ledit appel est un appel entrant destiné à l'abonné (10), ledit chemin de contenu (390) indiquant au moins un terminal entre ledit terminal multimédia (20a) et ledit terminal vocal (20b).
